# EUROPÄISCHE PATENTSCHRIFT

(11) **EP 3 984 645 B1**
(45) Veröffentlichungstag und Bekanntmachung des Hinweises auf die Patenterteilung: **07.06.2023**
(21) Anmeldenummer: 21197139.5
(22) Anmeldetag: 16.09.2021
(51) Int. Cl.: B02C 18/18, A01F 29/06, B26D 1/00, A01F 29/00

(54) **SCHNEIDELEMENT**
CUTTING ELEMENT
ÉLÉMENT DE COUPE

(30) Priorität: 21.09.2020 AT 508012020
(43) Veröffentlichungstag der Anmeldung: 20.04.2022
(73) Patentinhaber: Gebrüder Busatis Gesellschaft m.b.H., 3251 Purgstall an der Erlauf (AT)
(72) Erfinder: Lutz, Wolfgang, 3250 Wieselburg (AT)
(74) Vertreter: Puchberger & Partner Patentanwälte

(56) Entgegenhaltungen:
- EP-A1- 3 315 008
- EP-A1- 3 354 126
- EP-A2- 0 875 323
- GB-A- 2 257 084

## Beschreibung

Die Erfindung betrifft ein Schneidelement, insbesondere für abrasives Schnittgut, umfassend ein Substrat mit mindestens einem Schneidkeil, der von zwei sich entlang einer Keilkante schneidenden Keilflächen gebildet wird, wobei sich über eine erste Keilfläche ausgehend von einer im Neuzustand auf der Keilkante liegenden Schneidkante, eine Schneidschicht erstreckt, deren Verschleißwiderstand größer ist als der Verschleißwiderstand des Substrats, wobei die Schneidschicht aufgrund von voreilendem Verschleiß des Substrats im Bereich der zweiten Keilfläche einen über die Keilkante hinausragenden klingenförmigen Überstand mit einer sich selbst nachschärfenden Schneidkante aufweist, wobei die überwiegend unterhalb der ersten Keilfläche liegende Schneidschicht mittels schmelzmetallurgischer Modifikation der Randzone des Substrats durch in-situ-Ausscheidung feindispers verteilter arteigener Hartphasen aus der partiell aufgeschmolzenen Randzone des Substrats gebildet ist.

Weiters betrifft die Erfindung ein Verfahren zur Herstellung eines Schneidelements, eine Schneidvorrichtung und einen Feldhäcksler mit einer rotierenden Häckseltrommel.

Das erfindungsgemäße Schneidelement ist bevorzugt zum Abschneiden oder Zerkleinern landwirtschaftlicher Güter, insbesondere für den Einsatz als Messer für Häckseltrommeln von Feldhäckslern bestimmt. Für das Zerkleinern landwirtschaftlicher Güter wie Gras, Luzerne, Mais, Hirse und dergleichen, nachfolgend als abrasives Schnittgut bezeichnet, werden Feldhäcksler eingesetzt, bei denen Messer auf einer rotierenden Häckseltrommel befestigt sind, die an einer stationären Gegenschneide vorbeigeführt werden. Das abrasive Schnittgut wird zwischen den umlaufenden Messern und der feststehenden Gegenschneide zerkleinert. Solche Häckseltrommeln für Feldhäcksler sind unter anderem aus den Offenlegungsschriften DE102016112577A1 und DE102017201160A1 bekannt.

Derzeit am Markt befindliche Messer für Häckseltrommeln von Feldhäckslern werden aus martensitisch oder bainitisch gehärtetem Vergütungsstahl gefertigt und weisen einen Schneidkeil mit einer verschleißbeständigen Schneidschicht in Form einer Hartstoffbeschichtung auf, die im Bereich einer Keilfläche, ausgehend von der im Neuzustand auf der Keilkante liegenden Schneidkante, auf das Substrat gesintert wird. Mithilfe dieser Schneidschicht bleibt der Schneidkeil bei rein abrasiver Beanspruchung durch das Schnittgut, wie bei der Ernte stengeliger Halmgüter wie beispielsweise Mais, Hirse oder Miscanthus, die unmittelbar vor dem Häckseln abgeschnitten werden und somit nicht mit am Boden befindlichen grobstückigen Fremdkörpern verunreinigt sind, lange scharf, wodurch über einen großen Zeitraum eine gute Häckselqualität sichergestellt und eine hohe Standzeit der Messer erzielt wird.

Bei den Schneidelementen nach dem Stand der Technik ist die Schneidschicht eine Hartstoffbeschichtung aus einer Pseudolegierung, bestehend aus einer Matrix aus einer Nichteisenlegierung, insbesondere einer Nickelbasislegierung, mit darin dispergierten synthetischen Hartstoffpartikeln, insbesondere Wolframsinterkarbiden, die durch ein thermisches Spritzverfahren aufgebracht und nachträglich gesintert wird. Durch den unterschiedlichen Verschleißwiderstand der Schneidschicht und des Substrats stellt sich durch das abrasive Schnittgut im Feldeinsatz ein makroskopischer selektiver Verschleiß am Schneidkeil ein. Das bedeutet, das Substrat verschleißt im Bereich der nicht beschichteten Keilfläche schneller als die angrenzende Schneidschicht auf der beschichteten Keilfläche. Infolge des voreilenden Materialabtrags am Substrat entsteht durch die klingenförmig überstehende Schneidschicht der Effekt einer Selbstschärfung, der den Schneidkeil ohne Nachschleifen scharf hält. Derartige hartstoffbeschichtete Messer für Häckseltrommeln von Feldhäckslern sind beispielsweise in den Patentschriften EP3315008, EP875323B1 und EP2786651 B1 beschrieben.

Bei den in der Hartstoffbeschichtung nach dem Stand der Technik üblicherweise als Matrixwerkstoff eingesetzten Nickelbasislegierungen wird der Schmelzpunkt des reinen Nickels von 1455°C zur besseren Sinterbarkeit der aufgespritzten Matrix durch Hinzulegieren von Bor und Silizium auf 1000 bis 1200°C gesenkt. Gleichzeitig verleihen diese schmelzpunktsenkenden Legierungselemente der eutektischen Lotlegierung auch ihren selbstfließenden Charakter und sorgen so für eine bessere Benetzbarkeit des Substrats und der dispergierten artfremden synthetischen Hartstoffpartikel. Die nachteilige Wirkung der Legierungselemente Bor und Silizium liegt jedoch in der Bildung von spröden intermetallischen Hartphasen, die zu verminderter Zähigkeit und erhöhter Schlagempfindlichkeit der Matrix führen.

Ein weiterer Nachteil der Hartstoffbeschichtung nach dem Stand der Technik ist, dass die auf die niedrigschmelzende Matrixlegierung abgestimmte Sintertemperatur unterhalb des Schmelzpunkts des Substrats und der Hartstoffpartikel liegt und daher beim Sintervorgang nur die Matrix aufgeschmolzen wird, wodurch sowohl die Bindung der Hartstoffbeschichtung an das Substrat als auch die Einbindung der Hartstoffpartikel in die Matrix nur durch einen sehr schwachen Stoffschluss über einen Diffusionssaum entlang der jeweiligen Grenzfläche erfolgt.

Aufgrund der angeführten Nachteile der Hartstoffbeschichtung nach dem Stand der Technik kommt es beim Häckseln von Anwelksilage wie Gras, Luzerne oder Klee, die nach dem Mähen zunächst in Schwaden am Boden abgelegt und erst nach einer bestimmten Anwelkzeit zum Häckseln aufgenommen wird, infolge der Schlagbeanspruchung der Messer durch grobstückige Fremdkörper im Schnittgut wie Steine und dergleichen, zum Ausbrechen der Hartstoffbeschichtung, zum Ablösen der Hartstoffbeschichtung vom Substrat und insbesondere zum Abbrechen des infolge temporärer Selbstschärfung über die Keilkante des Substrats hinausragenden Teils der Schneidschicht, was in einer Verrundung des Schneidkeils und einer Verschlechterung der Häckselqualität resultiert.

Ebenfalls problematisch erweist sich bei der Hartstoffbeschichtung nach dem Stand der Technik, dass der heterogene Werkstoffverbund der Hartstoffbeschichtung andere Materialeigenschaften als das Substrat aufweist und somit physikalische Eigenschaftssprünge an den Grenzflächen auftreten. Dies hat unter anderem zur Folge, dass bei der Abkühlung nach dem Sintern der Nickelbasislegierung der Hartstoffbeschichtung und nach dem Vergüten des Substrats aus Vergütungsstahl aufgrund unterschiedlicher Wärmeausdehnungskoeffizienten Mikroeigenspannungen entstehen, die zu Spannungsrissen sowohl in der Hartstoffbeschichtung als auch im Substrat und im praktischen Einsatz zu rissinduzierten Brüchen der Schneidschicht oder des ganzen Schneidelements führen können.

Beim Häckseln von Anwelksilage kommt es neben der Schlagbeanspruchung durch grobstückige Fremdkörper im Schnittgut, die wie bereits beschrieben durch makroskopisches Versagen der Schneidschicht keine nachhaltige Selbstschärfung der Schneidkante entstehen und somit den Schneidkeil verrunden lässt, zusätzlich zu einem mikroskopischen abrasiven Verschleißangriff durch feine Partikel im Schnittgut. Da in der Hartstoffbeschichtung nach dem Stand der Technik eine grobdisperse Verteilung der Hartstoffpartikel mit einem mittleren freien Abstand von über 20 µm vorliegt, bieten sich den feinen harten Partikeln mit Partikelgrößen unter 20 µm große Angriffsflächen zwischen den Hartstoffpartikeln. Die relativ weiche Matrix der Hartstoffbeschichtung mit Härten, die üblicherweise unter 800 HV liegen, gerät durch die harten Abrasivpartikel im Schnittgut, wie beispielsweise durch Quarzsand mit einer Härte von etwa 1000 HV, in eine Verschleißhochlage, die zum Auswaschen der Matrix und Herauslösen der Hartstoffpartikel und somit zum Versagen der Schneidschicht durch mikroskopische selektive Erosion führt.

Ausgehend von diesem Stand der Technik ist es Aufgabe der vorliegenden Erfindung, ein Schneidelement mit einer gegen abrasiven Verschleiß durch feine Partikel im Schnittgut beständige Schneidschicht bereitzustellen, die so dünn ausgeführt werden kann, dass sich durch voreilenden Verschleiß des Substrats ein klingenförmiger Überstand mit einer sich selbst nachschärfenden Schneidkante ausbildet und die Schneidschicht bei Schlagbeanspruchung trotzdem nicht ausbricht, sich nicht vom Substrat ablöst und insbesondere der infolge Selbstschärfung über das Substrat hinausragende Teil der Schneidschicht nicht abbricht. Weiters soll eine Schneidvorrichtung und ein Feldhäcksler mit den gewünschten Eigenschaften vorgesehen sein.

Gemäß der Erfindung wird die Aufgabe durch ein Schneidelement gelöst, dass dadurch gekennzeichnet ist, dass die überwiegend unterhalb einer ersten Keilfläche liegende Schneidschicht mittels schmelzmetallurgischer Modifikation der Randzone des Substrats durch in-situ-Ausscheidung feindispers verteilter arteigener Hartphasen aus der partiell aufgeschmolzenen Randzone des Substrats gebildet wird.

Durch die erfindungsgemäße Bildung der Schneidschicht durch Modifikation der Randzone des Substrats dient das Substrat als duktile Matrix für die in-situausgeschiedenen und somit metallurgisch fest eingebundenen arteigenen Hartphasen, so dass ein homogener Werkstoffverbund ohne ausgeprägte Grenzflächen, physikalische Eigenschaftssprünge und Mikroeigenspannungen entsteht. Die feindisperse Verteilung der Hartphasen bietet den feinen Abrasivpartikeln im Schnittgut keine Angriffsflächen zwischen den Hartphasen der Schneidschicht, wodurch das Auswaschen der Matrix und Herauslösen der Hartphasen durch mikroskopische selektive Erosion vermieden wird.

Arteigene Hartphasen werden beim Abkühlen aus der Schmelze gebildet. Gemäß Erfindung erfolgt die Bildung der arteigenen Hartphasen bei der Verfahrensvariante der schmelzmetallurgischen Modifikation in Form eines reinen Umschmelzens durch direkte in-situ-Ausscheidung hartphasenbildender Legierungselemente, die sich bereits im Substrat befinden und bei der Verfahrensvariante in Form eines Umschmelzlegierens durch Einbringen von hartphasenbildenden Legierungselementen über einen Zusatzwerkstoff, vollständiges Auflösen der zusätzlich eingebrachten Legierungselemente in der partiell aufgeschmolzenen Randzone des Substrats und direktes in-situ-Wiederausscheiden aus der Schmelze als arteigene Hartphasen im Erstarrungsgefüge der Randzone des Substrats. Bei beiden Verfahrensvarianten entsteht durch die ausgeschiedenen arteigenen (homologen) Hartphasen ein homogenes mehrphasiges Legierungsgefüge ohne ausgeprägte Grenzflächen und Eigenschaftssprünge zwischen den einzelnen metallurgisch fest verbundenen arteigenen Gefügeelementen (Phasen). Dies unterscheidet sich wesentlich von Pseudolegierungen, bei denen artfremde Hartstoffe der Schmelze zugesetzt werden. Bei diesen Verfahren werden die artfremden (heterologen) Hartstoffpartikel in die Matrix eingebracht, wobei ein nachteiliger heterogener Werkstoffverbund mit Eigenschaftssprüngen an den Grenzflächen gebildet wird. Die artfremden Komponenten der Dispersionsmischung werden dabei über Diffusionssäume an den Grenzflächen nur durch einen sehr schwachen Stoffschluss miteinander verbunden.

Bevorzugt wird das erfindungsgemäße Schneidelement zum Abschneiden oder Zerkleinern landwirtschaftlicher Güter eingesetzt, insbesondere als bewegtes Messer auf der rotierenden Häckseltrommel eines Feldhäckslers, das mit einer feststehenden Gegenschneide zusammenwirkt.

Vorteilhafterweise ist der Verschleißwiderstand der Schneidschicht um mindestens 10% größer und vorzugsweise um mindestens 25% größer als der Verschleißwiderstand des Substrats, so dass die Schneidschicht durch voreilenden Verschleiß des Substrats im Bereich der zweiten Keilfläche einen über die Keilkante hinausragenden klingenförmigen Überstand mit einer sich selbst nachschärfenden Schneidkante ausbildet. Der Verschleißwiderstand gegen Abrasion kann über das Reibradverfahren nach der Norm ASTM G65 bestimmt werden.

Gemäß einer bevorzugten Ausführungsform der Erfindung beträgt die Dicke der Schneidschicht 0,1 bis 1,0 mm und besonders bevorzugt 0,2 bis 0,6 mm, so dass der verschleißinduzierte Überstand der Schneidschicht eine dünne klingenartige Form ausbildet und die Schneidschicht dadurch wie ein exponiert hervorstehender Schneidwerkstoff wirkt.

Um lokal unterschiedlichem Verschleiß an der Schneidschicht gezielt entgegen zu wirken, kann es vorteilhaft sein, dass die Dicke der Schneidschicht über die Fläche der Schneidschicht variiert.

Bei einer alternativen Ausführungsform umfasst die Schneidschicht nur eine oder mehrere Teilflächen der ersten Keilfläche.

In einer Ausführungsvariante erfolgt die schmelzmetallurgische Modifikation der Randzone des Substrats strahlgestützt. Derartige strahlgestützte Verfahren, wie beispielweise das Laserstrahlumschmelzen, zeichnen sich durch eine hohe Energiedichte des Strahls aus, sodass eine kurze Einwirkzeit des Hochenergiestrahls für die Modifikation der Randzone des Substrats ausreicht.

Vorzugsweise erfolgt die schmelzmetallurgische Modifikation der Randzone des Substrats durch partielle Aufschmelzung der Randzone des Substrats unter im Wesentlichen Beibehaltung der Geometrie des vorgeformten Schneidkeils. Diese endkonturnahe Modifikation der Randzone des Substrats wird durch Energiezufuhr über einen Hochenergiestrahl, die nur in sehr oberflächennahe Bereichen bis etwa 1 mm erfolgt, ermöglicht und bietet den Vorteil, dass keine oder nur sehr geringe mechanische Nacharbeit des Schneidkeils erforderlich ist.

Es ist ein Merkmal der Erfindung, dass die Ausscheidung der feindispers verteilten arteigenen Hartphasen direkt aus der partiell aufgeschmolzenen Randzone des Substrats durch rasche Erstarrung infolge Selbstabschreckung über schnelle Wärmeableitung in das Innere des Substrats erfolgt.

Als vorteilhaftes Merkmal der Erfindung haben die feindispers verteilten arteigenen Hartphasen eine Mikrohärte von mindestens 2100 HV und vorzugsweise von mindestens 2800 HV, wodurch die Härte der Abrasivpartikel im Schnittgut, wie etwa 1000 HV im Fall von Quarzsand, deutlich überschritten und somit eine Verschleißhochlage der Schneidschicht vermieden wird.

Es kann weiters vorteilhaft sein, dass die feindispers verteilten arteigenen Hartphasen einen Volumenanteil von mindestens 5% und vorzugsweise von mindestens 10% in der Schneidschicht haben.

Um eine Schneidschicht mit vorteilhaftem gradiertem Schichtaufbau zu generieren, ist in einer Variante der Erfindung vorgesehen, dass der Volumenanteil der feindispers verteilten arteigenen Hartphasen in der Schneidschicht variiert.

Durch eine Ausführungsvariante, bei der die feindispers verteilten arteigenen Hartphasen einen mittleren freien Abstand von weniger als 20 µm und vorzugsweise von weniger als 10 µm haben, ergibt sich als vorteilhafter Effekt, dass die feinen Abrasivpartikel im Schnittgut keine Angriffsfläche zwischen den Hartphasen der Schneidschicht vorfinden.

Die feindispers verteilten arteigenen Hartphasen können Karbide, Boride, Nitride oder Oxide, vorzugsweise Monokarbide wie beispielsweise Vanadium-, Titan- oder Niobkarbide sein.

In einer möglichen Variante der Erfindung erfolgt die schmelzmetallurgische Modifikation der Randzone des Substrats durch Einbringen eines pulverförmigen Zusatzwerkstoffes, der vorzugsweise ein monokarbidbildendes refraktäres Legierungselement wie beispielsweise Vanadium, Titan oder Niob enthält. Es kommt dabei im lokalen Schmelzbad der partiell aufgeschmolzenen Randzone des Substrats zum vollständigen Auflösen des eingebrachten Zusatzwerkstoffs und durch rasche Erstarrung infolge Selbstabschreckung über schnelle Wärmeableitung in das Innere des Substrats zum Wiederausscheiden gleichmäßig feindispers verteilter Monokarbidphasen mit starker Einbindung in der Matrixmetallphase des Substrats. Der hohen Löslichkeit der refraktären Legierungselemente in der Schmelze steht eine geringe Löslichkeit im festen Zustand gegenüber, so dass die Erstarrung zu einem guten Ausbringen der Hartphasen führt. Es entsteht ein mikrokristallines Erstarrungsgefüge mit einer gleichmäßigen feindispersen Verteilung von Monokarbidausscheidungen in einer zähen martensitischen oder bainitischen Stahlmatrix, die diese Hartphasenausscheidungen im Verschleißwiderstand unterstützt. Morphologie, Größe, Verteilung und Härte der Monokarbide ergeben gemeinsam mit der duktilen Stahlmatrix ein Legierungssystem, welches extreme Schlagzähigkeit und höchste Verschleißbeständigkeit aufweist.

Die Erfindung betrifft auch ein Verfahren zur Herstellung eines Schneidelements wie zuvor beschrieben, welches folgende Schritte umfasst:
- Mechanische Bearbeitung des Substrats mit endkonturnaher Vorformung mindestens eines Schneidkeils, der von zwei sich entlang einer Keilkante schneidenden Keilflächen gebildet wird,
- Bildung einer von der Keilkante ausgehenden und überwiegend unterhalb der ersten Keilfläche liegenden verschleißbeständigen Schneidschicht mittels schmelzmetallurgischer Modifikation der Randzone des Substrats durch in-situ-Ausscheidung feindispers verteilter arteigener Hartphasen des Substrats.

In Weiterbildung der Erfindung kann zur schmelzmetallurgischen Modifikation der Randzone des Substrats ein pulverförmiger Zusatzwerkstoff, der vorzugsweise ein monokarbidbildendes refraktäres Legierungselement, wie beispielsweise Vanadium, Titan oder Niob, enthält, eingebracht werden.

Die schmelzmetallurgische Modifikation der Randzone des Substrats wird mittels Hochenergiestrahl kontinuierlich entlang der Keilkante durchgeführt.

Die schmelzmetallurgische Modifikation der Randzone des Substrats wird in oberflächennahen Bereichen bis etwa 1 mm Tiefe unter im Wesentlichen Beibehaltung der Geometrie des vorgeformten Schneidkeils durchgeführt.

Weiters betrifft die Erfindung eine Schneidvorrichtung unter Verwendung eines oder mehrerer Schneidelemente, wobei zumindest ein oder mehrere Schneidelemente an einer Häckseltrommel angeordnet sind und wobei eine feststehende Gegenschneide zum Zusammenwirken mit den bewegten Schneidelementen vorgesehen ist.

Weiters betrifft die Erfindung einen Feldhäcksler mit einer rotierenden Häckseltrommel, wobei an der Häckseltrommel eine Mehrzahl der Schneidelemente angeordnet sind und wobei zumindest eine feste Gegenschneide zum Zusammenwirken mit den bewegten Schneidelementen vorgesehen ist.

Nachfolgend wird die Erfindung anhand schematischer Zeichnungen eines Messers für die Häckseltrommel eines Feldhäckslers beispielhaft beschrieben.
Fig. 1 zeigt ein Messer nach dem Stand der Technik im Neuzustand in einer Seitenansicht.
Fig. 2 zeigt den Verschleiß eines Messers nach dem Stand der Technik im eingesetzten Zustand in einer Seitenansicht.
Fig. 3 zeigt ein Messer gemäß der Erfindung im Neuzustand in einer Seitenansicht.
Fig. 4 zeigt den Verschleiß eines Messers gemäß der Erfindung im eingesetzten Zustand in einer Seitenansicht.

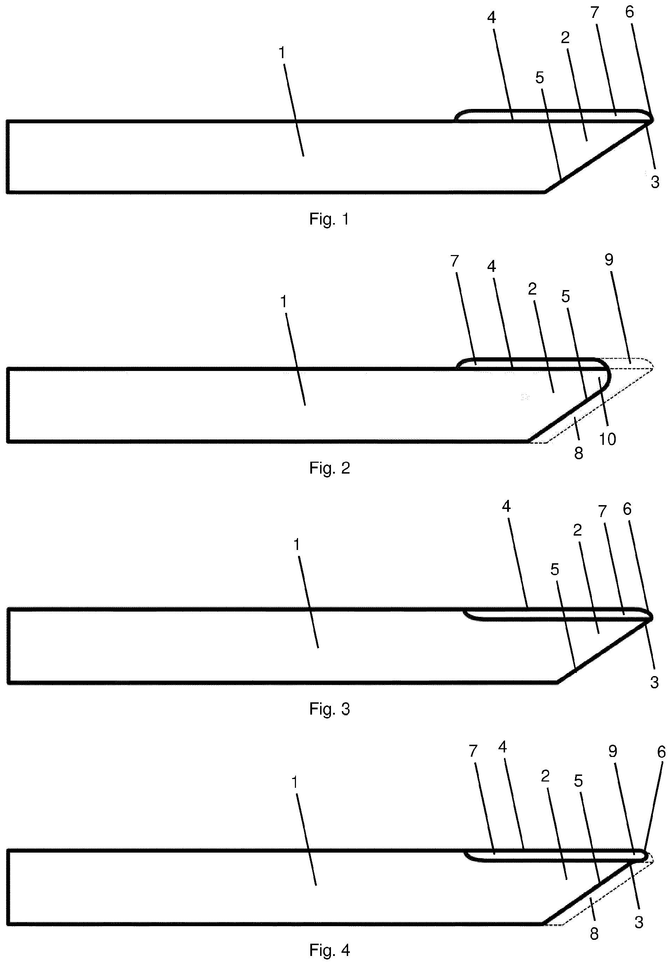

In Fig. 1 ist ein ebenes Messer für die Häckseltrommel eines Feldhäckslers nach dem Stand der Technik im Neuzustand in einer Seitenansicht schematisch dargestellt. Das Messer aus einem Substrat 1 aus martensitischen oder bainitischen Stahl hat üblicherweise eine Dicke von 5 bis 15 mm, eine Breite von 50 bis 150 mm, eine Länge von 150 bis 450 mm und kann neben der dargestellten ebenen Form auch in einer räumlich gekrümmten Form ausgeführt sein. Ferner weist das Messer im Substratbereich außerhalb des Schneidkeils 2 Ausnehmungen zur Befestigung an den Messerträgern der Häckseltrommel mittels Befestigungselementen auf, auf die, im Sinne einer klareren Darstellung, verzichtet wird. Die schneidende Funktion des Messers wird durch einen spitzwinkeligen Schneidkeil 2, der eine Keilkante 3 aufweist und von einer ersten Keilfläche 4 und einer zweiten Keilfläche 5 eingeschlossen wird, übernommen. Die Schneidkante 6 erstreckt sich im Neuzustand entlang der Keilkante 3 und ist Teil der Schneidschicht 7, die in Form einer Hartstoffbeschichtung durch ein thermisches Spritzverfahren auf die erste Keilfläche 4 aufgetragen und nachträglich mittels einer Flamme, induktiv oder in einem Ofen gesintert wird. Bei den Messern gemäß dem Stand der Technik weist die Hartstoffbeschichtung eine Dicke von 0,2 bis 0,6 mm und eine Breite von 10 bis 30 mm auf.

Wie der schematischen Seitenansicht eines Messers für die Häckseltrommel eines Feldhäckslers nach dem Stand der Technik im eingesetzten Zustand aus der Fig. 2 zu entnehmen ist, führt die Schlagbeanspruchung durch grobstückige Fremdkörper im Schnittgut infolge der bereits beschriebenen Nachteile der Ausführung der Schneidschicht 7 nach dem Stand der Technik zum Versagen der Schneidschicht 7 durch Ausbrechen der Schneidschicht 7, Ablösen der Schneidschicht 7 von der Keilfläche 4 des Substrats 1 und Abbrechen des durch voreilenden Verschleiß 8 des Substrats 1 im Bereich der zweiten Keilfläche 5 temporär über das Substrat 1 hinausragenden Überstands 9 der Schneidschicht 7 und somit zur Verrundung 10 des Schneidkeils 2. Diese Verrundung 10 des Schneidkeils 2 hat eine deutliche Verschlechterung der Schnittqualität und einen massiven Anstieg des Kraftstoffbedarfs zur Folge. Um die Verrundung 10 am Schneidkeil 2 wieder zu beseitigen, ist ein häufiges Nachschleifen an der zweiten Keilfläche 5 erforderlich und mit dem damit verbundenen Materialabtrag am Schneidkeil 2 verkürzt sich die Lebensdauer des Messers signifikant.

Die Fig. 3 zeigt in einer schematischen Darstellung ein bevorzugtes Ausführungsbeispiel der vorliegenden Erfindung in Form eines Messers für die Häckseltrommel eines Feldhäckslers im Neuzustand in einer Seitenansicht. Wie beim Messer nach dem Stand der Technik weist das Substrat 1 aus Stahl einen Schneidkeil 2 auf, dessen Keilflächen 4 und 5 die Keilkante 3 bilden, die wiederum die Schneidkante 6 trägt. Im Unterschied zum Messer nach dem Stand der Technik liegt jedoch die von der Schneidkante 6 ausgehende Schneidschicht 7 überwiegend unterhalb der ersten Keilfläche 4 und die Bildung der in das Substrat 1 eingebetteten Schneidschicht 7 erfolgt mittels schmelzmetallurgischer Modifikation der Randzone des Substrats 1 durch in-situ-Ausscheidung feindispers verteilter arteigener Hartphasen aus der partiell aufgeschmolzenen Randzone des Substrats 1. Die partielle Aufschmelzung der Randzone des Substrats 1 erfolgt dabei unter im Wesentlichen Beibehaltung der Geometrie des vorgeformten Schneidkeils 2. Diese endkonturnahe Modifikation der Randzone des Substrats wird insbesondere durch Energiezufuhr über einen Hochenergiestrahl, die nur in sehr oberflächennahe Bereichen bis etwa 1 mm erfolgt, ermöglicht und bietet den Vorteil, dass keine oder nur sehr geringe mechanische Nacharbeit des Schneidkeils erforderlich ist.

Aus der Fig. 4 ist der vorteilhafte Verschleißverlauf eines Messers gemäß der Erfindung im eingesetzten Zustand in einer Seitenansicht ersichtlich. Die von der Schneidkante 6 ausgehende in das Substrat 1 eingebettete und überwiegend unterhalb der ersten Keilfläche 4 liegende Schneidschicht 7 bricht infolge der bereits beschriebenen Vorteile der Ausführung der Schneidschicht 7 gemäß der Erfindung bei Schlagbeanspruchung durch grobstückige Fremdkörper im Schnittgut nicht aus und löst sich auch nicht von der Keilfläche 4 des Substrats 1. Stattdessen bildet sich aufgrund von voreilendem Verschleiß 8 des Substrats 1 im Bereich der zweiten Keilfläche 5 ein über die Keilkante 3 des Schneidkeils 2 hinausragender klingenförmiger Überstand 9 mit einer sich selbst nachschärfenden Schneidkante 6 aus. Der klingenförmige Überstand 9 der Schneidschicht 7 bricht aufgrund der vorteilhaften Materialeigenschaften der erfindungsgemäßen Ausführung auch bei Schlagbeanspruchung durch grobstückige Fremdkörper im Schnittgut nicht ab. Durch den dadurch ermöglichten nachhaltigen Effekt der Selbstschärfung kann die Häufigkeit des Nachschleifens an der zweiten Keilfläche 5 deutlich reduziert und Lebensdauer des Messers entsprechend verlängert werden.

Die Erfindung ist nicht auf das dargestellte Ausführungsbeispiel beschränkt, sondern kann generell für Schneidelemente zum Schneiden von abrasiven Schnittgut, die einer Schlagbeanspruch ausgesetzt sind, angewandt werden.

### Bezugszeichenliste

- 1: Substrat
- 2: Schneidkeil
- 3: Keilkante
- 4: Erste Keilfläche
- 5: Zweite Keilfläche
- 6: Schneidkante
- 7: Schneidschicht
- 8: Verschleiß des Substrats
- 9: Überstand der Schneidschicht
- 10: Verrundung des Schneidkeils

## Patentansprüche

1. Schneidelement, insbesondere für abrasives Schnittgut, umfassend ein Substrat (1) mit mindestens einem Schneidkeil (2), der von zwei sich entlang einer Keilkante (3) schneidenden Keilflächen (4, 5) gebildet wird, wobei sich über eine erste Keilfläche (4), ausgehend von einer im Neuzustand auf der Keilkante (3) liegenden Schneidkante (6), eine Schneidschicht (7) erstreckt, deren Verschleißwiderstand größer ist als der Verschleißwiderstand des Substrats (1), wobei die Schneidschicht (7) aufgrund von voreilendem Verschleiß (8) des Substrats (1) im Bereich der zweiten Keilfläche (5) einen über die Keilkante (3) hinausragenden klingenförmigen Überstand (8) mit einer sich selbst nachschärfenden Schneidkante (6) aufweist, **dadurch gekennzeichnet, dass** die überwiegend unterhalb der ersten Keilfläche (4) liegende Schneidschicht (7) mittels schmelzmetallurgischer Modifikation der Randzone des Substrats (1) durch in-situ-Ausscheidung feindispers verteilter arteigener Hartphasen aus der partiell aufgeschmolzenen Randzone des Substrats (1) gebildet ist.

2. Schneidelement nach Anspruch 1, **dadurch gekennzeichnet, dass** der Verschleißwiderstand der Schneidschicht (7) um mindestens 10% größer und vorzugsweise um mindestens 25% größer als der Verschleißwiderstand des Substrats (1) ist.

3. Schneidelement nach einem der vorhergehenden Ansprüche 1 oder 2, **dadurch gekennzeichnet, dass** die Dicke der Schneidschicht (7) 0,1 bis 1,0 mm und vorzugsweise 0,2 bis 0,6 mm beträgt.

4. Schneidelement nach einem der vorhergehenden Ansprüche 1 bis 3, **dadurch gekennzeichnet, dass** die Dicke der Schneidschicht (7) über die Fläche der Schneidschicht (7) variiert.

5. Schneidelement nach einem der vorhergehenden Ansprüche 1 bis 4, **dadurch gekennzeichnet, dass** die Schneidschicht (7) nur eine oder mehrere Teilflächen der ersten Keilfläche (4) umfasst.

6. Schneidelement nach einem der vorhergehenden Ansprüche 1 bis 5, **dadurch gekennzeichnet, dass** die Randzone des Substrats (1) strahlgestützt einer schmelzmetallurgischen Modifikation unterworfen ist.

7. Schneidelement nach einem der vorhergehenden Ansprüche 1 bis 6, **dadurch gekennzeichnet, dass** die Randzone des Substrats (1) durch partielle Aufschmelzung der Randzone des Substrats (1) unter im Wesentlichen Beibehaltung der Geometrie des vorgeformten Schneidkeils (2) schmelzmetallurgisch modifiziert ist.

8. Schneidelement nach einem der vorhergehenden Ansprüche 1 bis 7, **dadurch gekennzeichnet, dass** die Modifikation durch Ausscheidung der feindispers verteilten arteigenen Hartphasen direkt aus der partiell aufgeschmolzenen Randzone des Substrat (1) durch rasche Erstarrung infolge Selbstabschreckung über schnelle Wärmeableitung in das Innere des Substrats (1) vorgesehen ist.

9. Schneidelement nach einem der vorhergehenden Ansprüche 1 bis 8, **dadurch gekennzeichnet, dass** die feindispers verteilten arteigenen Hartphasen eine Mikrohärte von mindestens 2100 HV und vorzugsweise von mindestens 2800 HV aufweisen.

10. Schneidelement nach einem der vorhergehenden Ansprüche 1 bis 9, **dadurch gekennzeichnet, dass** die feindispers verteilten arteigenen Hartphasen einen Volumenanteil von mindestens 5% und vorzugsweise von mindestens 10% in der Schneidschicht (7) aufweisen.

11. Schneidelement nach einem der vorhergehenden Ansprüche 1 bis 10, **dadurch gekennzeichnet, dass** der Volumenanteil der feindispers verteilten arteigenen Hartphasen in der Schneidschicht (7) variiert.

12. Schneidelement nach einem der vorhergehenden Ansprüche, **dadurch gekennzeichnet, dass** die feindispers verteilten arteigenen Hartphasen einen mittleren freien Abstand von weniger als 20 µm und vorzugsweise von weniger als 10 µm haben.

13. Schneidelement nach einem der vorhergehenden Ansprüche, **dadurch gekennzeichnet, dass** die feindispers verteilten arteigenen Hartphasen Karbide, Boride, Nitride oder Oxide, vorzugsweise Monokarbide eines refraktären Legierungselements, wie beispielsweise Vanadium-, Titan- oder Niobkarbide, sind.

14. Schneidelement nach einem der vorhergehenden Ansprüche, **dadurch gekennzeichnet, dass** die schmelzmetallurgische Modifikation der Randzone des Substrats (1) durch Einbringen eines pulverförmigen Zusatzwerkstoffes, der vorzugsweise ein monokarbidbildendes refraktäres Legierungselement, wie beispielsweise Vanadium, Titan oder Niob, enthält, gegeben ist.

15. Schneidelement nach einem der vorhergehenden Ansprüche, **dadurch gekennzeichnet, dass** das Substrat (1) eine Stahllegierung mit karbidbildenden Legierungselementen, wie beispielsweise Vanadium, Titan, Niob oder Chrom, ist.

16. Verfahren zur Herstellung eines Schneidelements aus einem Substrat (1) gemäß den vorhergehenden Ansprüchen, welches folgende Schritte umfasst:
- Mechanische Bearbeitung des Substrats (1) mit endkonturnaher Vorformung mindestens eines Schneidkeils (2), der von zwei sich entlang einer Keilkante (3) schneidenden Keilflächen (4, 5) gebildet wird,
- Bildung einer von der Keilkante (3) ausgehenden und überwiegend unterhalb der ersten Keilfläche (4) liegenden verschleißbeständigen Schneidschicht (7) mittels schmelzmetallurgischer Modifikation der Randzone des Substrats (1) durch in-situ-Ausscheidung feindispers verteilter arteigener Hartphasen des Substrats (1).

17. Verfahren nach Anspruch 16, **dadurch gekennzeichnet, dass** zur schmelzmetallurgischen Modifikation der Randzone des Substrats (1) ein pulverförmiger Zusatzwerkstoff, der vorzugsweise ein monokarbidbildendes refraktäres Legierungselement, wie beispielsweise Vanadium, Titan oder Niob, enthält, eingebracht wird.

18. Verfahren nach Anspruch 16 oder 17, **dadurch gekennzeichnet, dass** die schmelzmetallurgische Modifikation der Randzone des Substrats (1) mittels Hochenergiestrahl kontinuierlich entlang der Keilkante (2) durchgeführt wird.

19. Verfahren nach einem der Ansprüche 16 bis 18, **dadurch gekennzeichnet, dass** die schmelzmetallurgische Modifikation der Randzone des Substrats (1) in oberflächennahen Bereichen bis etwa 1 mm Tiefe unter im Wesentlichen Beibehaltung der Geometrie des vorgeformten Schneidkeils (2) durchgeführt wird.

20. Schneidvorrichtung unter Verwendung eines oder mehrerer Schneidelemente nach einem oder mehreren vorangegangenen Ansprüchen, **dadurch gekennzeichnet, dass** zumindest ein oder mehrere Schneidelemente an einer Häckseltrommel angeordnet sind und dass eine feststehende Gegenschneide zum Zusammenwirken mit den bewegten Schneidelementen vorgesehen ist.

21. Feldhäcksler mit einer rotierenden Häckseltrommel, **dadurch gekennzeichnet, dass** an der Häckseltrommel eine Mehrzahl der Schneidelemente nach einem oder mehreren der Ansprüche 1 bis 15 angeordnet sind und dass zumindest eine feste Gegenschneide zum Zusammenwirken mit den bewegten Schneidelementen vorgesehen ist.

## Claims

1. A cutting element, in particular for abrasive cut material, comprising a substrate (1) with at least one cutting wedge (2), which is formed by two wedge surfaces (4, 5), which intersect along a wedge edge (3), wherein a cutting layer (7), starting at a cutting edge (6), which, when new, lies on the wedge edge (3), extends over a first wedge surface (4), the wear resistance of which cutting layer (7) is greater than the wear resistance of the substrate (1), wherein the cutting layer (7), due to leading wear (8) of the substrate (1), has, in the area of the second wedge surface (5), a blade-shaped protrusion (8), which projects beyond the wedge edge (3) and has a self-resharpening cutting edge (6), **characterised in that** the cutting layer (7), which lies predominantly below the first wedge surface (4), is formed by means of melt-metallurgical modification of the peripheral zone of the substrate (1) by in-situ precipitation of finely dispersed inherent hard phases from the partially melted peripheral zone of the substrate (1).

2. The cutting element according to claim 1, **characterised in that** the wear resistance of the cutting layer (7) is greater than the wear resistance of the substrate (1) by at least 10 % and preferably by at least 25 %.

3. The cutting element according to one of the preceding claims 1 or 2, **characterised in that** the thickness of the cutting layer (7) is 0.1 to 1.0 mm and preferably 0.2 to 0.6 mm.

4. The cutting element according to one of the preceding claims 1 to 3, **characterised in that** the thickness of the cutting layer (7) varies across the surface of the cutting layer (7).

5. The cutting element according to one of the preceding claims 1 to 4, **characterised in that** the cutting layer (7) comprises only one or multiple partial surfaces of the first wedge surface (4).

6. The cutting element according to one of the preceding claims 1 to 5, **characterised in that** the peripheral zone of the substrate (1) is subjected to a beam-assisted melt-metallurgical modification.

7. The cutting element according to one of the preceding claims 1 to 6, **characterised in that** the peripheral zone of the substrate (1) is melt-metallurgically modified by partial melting of the peripheral zone of the substrate (1) while substantially retaining the geometry of the preformed cutting wedge (2).

8. The cutting element according to one of the preceding claims 1 to 7, **characterised in that** the modification is provided by precipitating the finely dispersed inherent hard phases directly from the partially melted peripheral zone of the substrate (1) by rapid solidification as a result of self-quenching via rapid heat dissipation into the interior of the substrate (1).

9. The cutting element according to one of the preceding claims 1 to 8, **characterised in that** the finely dispersed inherent hard phases have a micro-hardness of at least 2100 HV and preferably of at least 2800 HV.

10. The cutting element according to one of the preceding claims 1 to 9, **characterised in that** the finely dispersed inherent hard phases have a volume fraction of at least 5 % and preferably of at least 10 % in the cutting layer (7).

11. The cutting element according to one of the preceding claims 1 to 10, **characterised in that** the volume fraction of the finely dispersed inherent hard phases varies in the cutting layer (7).

12. The cutting element according to one of the preceding claims, **characterised in that** the finely dispersed inherent hard phases have a mean free distance of less than 20 µm and preferably less than 10 µm.

13. The cutting element according to one of the preceding claims, **characterised in that** the finely dispersed inherent hard phases are carbides, borides, nitrides or oxides, preferably monocarbides of a refractory alloying element, such as vanadium, titanium or niobium carbides.

14. The cutting element according to one of the preceding claims, **characterised in that** the melt-metallurgical modification of the peripheral zone of the substrate (1) is given by introducing a powdery filler material, which preferably contains a monocarbide-forming refractory alloying element, such as vanadium, titanium or niobium.

15. The cutting element according to one of the preceding claims, **characterised in that** the substrate (1) is a steel alloy containing carbide-forming alloying elements, such as vanadium, titanium, niobium or chromium.

16. A method for manufacturing a cutting element from a substrate (1) according to the preceding claims, comprising the steps of:
- mechanically processing the substrate (1) with near-net-shape preforming of at least one cutting wedge (2), which is formed by two wedge surfaces (4, 5), which intersect along a wedge edge (3),
- forming a wear-resistant cutting layer (7), which starts at the wedge edge (3) and lies predominantly below the first wedge surface (4), by means of melt-metallurgical modification of the peripheral zone of the substrate (1) by in-situ precipitation of finely dispersed inherent hard phases of the substrate (1).

17. The method according to claim 16, **characterised in that** for the melt-metallurgical modification of the peripheral zone of the substrate (1) a powdery filler material, preferably containing a monocarbide-forming refractory alloying element, such as vanadium, titanium or niobium, is introduced.

18. The method according to claim 16 or 17, **characterised in that** the melt-metallurgical modification of the peripheral zone of the substrate (1) is carried out continuously along the wedge edge (2) by means of a high-energy beam.

19. The method according to one of claims 16 to 18, **characterised in that** the melt-metallurgical modification of the peripheral zone of the substrate (1) is performed in areas close to the surface to a depth of about 1 mm while substantially retaining the geometry of the preformed cutting wedge (2).

20. A cutting device, using one or more cutting elements according to one or more of the preceding claims, **characterised in that** at least one or more cutting elements are arranged on a chopping drum and **in that** a fixed counter-blade is provided for cooperating with the moving cutting elements.

21. A forage harvester, comprising a rotating chopping drum, **characterised in that** a plurality of the cutting elements according to one or more of claims 1 to 15 are arranged on the chopping drum and **in that** at least one fixed counter-blade is provided for cooperating with the moving cutting elements.

## Revendications

1. Elément de coupe, en particulier pour des produits de coupe abrasifs, comprenant un substrat (1) avec au moins un coin de coupe (2), qui est formé par deux faces de coin (4, 5) se coupant le long d'une arête de coin (3), une couche coupante (7), dont la résistance à l'usure est supérieure à la résistance à l'usure du substrat (1), s'étendant sur une première face de coin (4), en partant d'une arête coupante (6) se trouvant à l'état neuf sur l'arête de coin (3), la couche coupante (7) présentant, en raison de l'usure avant (8) du substrat (1), dans la zone de la deuxième face de coin (5), une saillie (8) en forme de lame dépassant de l'arête de coin (3), avec une arête coupante (6) qui s'auto-affûte, **caractérisé en ce que** la couche coupante (7) située principalement en dessous de la première surface de coin (4) est formée au moyen d'une modification métallurgique de fusion de la zone marginale du substrat (1) par précipitation in situ de phases dures propres à l'espèce et finement dispersées à partir de la zone marginale du substrat (1) partiellement fondue.

2. Elément de coupe selon la revendication 1, **caractérisé en ce que** la résistance à l'usure de la couche coupante (7) est supérieure d'au moins 10 % et de préférence d'au moins 25 % à la résistance à l'usure du substrat (1).

3. Elément de coupe selon l'une des revendications précédentes 1 ou 2, **caractérisé en ce que** l'épaisseur de la couche coupante (7) est de 0,1 à 1,0 mm et de préférence de 0,2 à 0,6 mm.

4. Elément de coupe selon l'une quelconque des revendications précédentes 1 à 3, **caractérisé en ce que** l'épaisseur de la couche coupante (7) varie sur la surface de la couche coupante (7).

5. Elément de coupe selon l'une quelconque des revendications précédentes 1 à 4, **caractérisé en ce que** la couche coupante (7) comprend une seule ou plusieurs surfaces partielles de la première face de coin (4).

6. Elément de coupe selon l'une quelconque des revendications précédentes 1 à 5, **caractérisé en ce que** la zone marginale du substrat (1) est soumise à une modification métallurgique de fusion assistée par faisceau.

7. Elément de coupe selon l'une quelconque des revendications précédentes 1 à 6, **caractérisé en ce que** la zone marginale du substrat (1) est modifiée par métallurgie de fusion par fusion partielle de la zone marginale du substrat (1) en conservant sensiblement la géométrie du coin de coupe (2) préformé.

8. Elément de coupe selon l'une quelconque des revendications précédentes 1 à 7, **caractérisé en ce que** la modification est prévue par précipitation des phases dures propres à l'espèce, finement dispersées, directement à partir de la zone marginale du substrat (1) partiellement fondue, par solidification rapide suite à une auto-trempe par dissipation rapide de la chaleur vers l'intérieur du substrat (1).

9. Elément de coupe selon l'une quelconque des revendications précédentes 1 à 8, **caractérisé en ce que** les phases dures propres à l'espèce, finement dispersées, présentent une microdureté d'au moins 2100 HV et de préférence d'au moins 2800 HV.

10. Elément de coupe selon l'une quelconque des revendications précédentes 1 à 9, **caractérisé en ce que** les phases dures propres à l'espèce, finement dispersées, présentent une fraction volumique d'au moins 5 % et de préférence d'au moins 10 % dans la couche coupante (7).

11. Elément de coupe selon l'une quelconque des revendications précédentes 1 à 10, **caractérisé en ce que** la fraction volumique des phases dures propres à l'espèce, finement dispersées, varie dans la couche coupante (7).

12. Elément de coupe selon l'une quelconque des revendications précédentes, **caractérisé en ce que** les phases dures propres à l'espèce, finement dispersées, ont un espacement libre moyen inférieur à 20 µm et de préférence inférieur à 10 µm.

13. Elément de coupe selon l'une quelconque des revendications précédentes, **caractérisé en ce que** les phases dures propres à l'espèce, finement dispersées, sont des carbures, des borures, des nitrures ou des oxydes, de préférence des monocarbures d'un élément d'alliage réfractaire, comme par exemple des carbures de vanadium, de titane ou de niobium.

14. Elément de coupe selon l'une quelconque des revendications précédentes, **caractérisé en ce que** la modification métallurgique de fusion de la zone marginale du substrat (1) est donnée par l'introduction d'un matériau d'apport pulvérulent contenant de préférence un élément d'alliage réfractaire formant un monocarbure, comme par exemple le vanadium, le titane ou le niobium.

15. Elément de coupe selon l'une quelconque des revendications précédentes, **caractérisé en ce que** le substrat (1) est un alliage d'acier contenant des éléments d'alliage formant des carbures, tels que du vanadium, du titane, du niobium ou du chrome.

16. Procédé de fabrication d'un élément de coupe à partir d'un substrat (1) selon les revendications précédentes, qui comprend les étapes suivantes :
- usinage mécanique du substrat (1) avec préformage proche du contour final d'au moins un coin de coupe (2), qui est formé par deux faces de coin (4, 5) se coupant le long d'une arête de coin (3),
- formation d'une couche coupante (7) résistante à l'usure, partant de l'arête en coin (3) et située principalement en dessous de la première face en coin (4), au moyen d'une modification métallurgique de fusion de la zone marginale du substrat (1) par précipitation in situ de phases dures propres à l'espèce et finement dispersées du substrat (1).

17. Procédé selon la revendication 16, **caractérisé en ce que**, pour la modification métallurgique de fusion de la zone marginale du substrat (1), un matériau d'apport pulvérulent, qui contient de préférence un élément d'alliage réfractaire formant un monocarbure, comme par exemple le vanadium, le titane ou le niobium, est introduit.

18. Procédé selon la revendication 16 ou 17, **caractérisé en ce que** la modification métallurgique de fusion de la zone marginale du substrat (1) est réalisée en continu le long de l'arête de coin (2) au moyen d'un faisceau à haute énergie.

19. Procédé selon l'une quelconque des revendications 16 à 18, **caractérisé en ce que** la modification métallurgique de fusion de la zone marginale du substrat (1) est réalisée dans des régions proches de la surface jusqu'à une profondeur d'environ 1 mm, en conservant sensiblement la géométrie du coin de coupe (2) préformé.

20. Dispositif de coupe utilisant un ou plusieurs éléments de coupe selon une ou plusieurs revendications précédentes, **caractérisé en ce qu'**au moins un ou plusieurs éléments de coupe sont disposés sur un tambour de hachage et **en ce qu'**une contre-lame fixe est prévue pour coopérer avec les éléments de coupe mobiles.

21. Ensileuse comprenant un tambour de hachage rotatif, **caractérisée en ce qu'**une pluralité des éléments de coupe selon une ou plusieurs des revendications 1 à 15 sont disposés sur le tambour de hachage et **en ce qu'**au moins une contre-lame fixe est prévue pour coopérer avec les éléments de coupe mobiles.
